# FASCICULE DE BREVET EUROPEEN

(11) **EP 1 095 486 B1**
(45) Date de publication et mention de la délivrance du brevet: **29.03.2006**
(21) Numéro de dépôt: 99955574.1
(22) Date de dépôt: 08.06.1999
(51) Int. Cl.: H04L 12/28, H04B 1/20

(54) **PROCEDE DE PROGAMMATION D'ACTIONS DE RESSOURCES DANS UN RESEAU DE COMMUNICATION DOMESTIQUE**
VERFAHREN ZUR PROGRAMMIERUNG VON RESOURCEAKTIONEN IN EINEM HEIMNETZ
METHOD FOR PROGRAMMING RESOURCE ACTIONS IN A DOMESTIC COMMUNICATION NETWORK

(30) Priorité: 08.06.1998 FR 9807187
(43) Date de publication de la demande: 02.05.2001
(73) Titulaire: THOMSON multimedia, 92100 Boulogne Billancourt (FR)
(72) Inventeur: FANNECHERE, Nicolas, Thomson Multimedia, 92648 Boulogne Cedex (FR); COEZ, Fabienne, Thomson Multimedia, 92648 Boulogne Cedex (FR)
(74) Mandataire: Kohrs, Martin
(86) Numéro de dépôt international: PCT/FR1999/001357
(87) Numéro de publication internationale: WO 1999/065189

(56) Documents cités:
- EP-A- 0 535 749
- US-A- 4 855 730
- "AUDIO UND VIDEO IM HEIM-NETZWERK" FUNKSCHAU, vol. 63, no. 6, 8 mars 1991 (1991-03-08), pages 74, 76, 78-79, XP000222653

## Description

L'invention concerne un procédé de programmation d'actions de ressources, c'est à dire de fonctionnalités d'appareils, dans un réseau de communication domestique, notamment un réseau comportant un bus série IEEE 1394-1995.

Dans un réseau de communication domestique auquel sont reliés des appareils audio/vidéo ou 'noeuds', un utilisateur devrait avoir la possibilité de programmer une action à effectuer par l'un des appareils à partir de n'importe quel appareil possédant un affichage. A titre d'exemple, il devrait être possible de programmer l'enregistrement d'une émission par un appareil d'enregistrement quelconque, par exemple un magnétoscope, à partir de n'importe quel téléviseur ou autre moyen de visualisation relié au réseau.

Le document EP-A-0535749 décrit un réseau d'appareils de type DLB.

L'invention concerne un procédé de programmation d'actions de ressources dans un réseau d'appareils domestiques caractérisé en ce qu'il comporte les étapes de :
- émission d'une demande de programmation d'une action par une application cliente vers un gestionnaire d'actions préprogrammées d'un appareil du réseau, ladite demande de programmation comportant un ensemble de paramètres de définition de l'action et une liste de ressources impliquées dans l'accomplissement de l'action,
- vérification par ledit gestionnaire d'actions de la disponibilité des ressources impliquées dans l'accomplissement de l'action,
- transmission à l'application cliente d'un message d'acceptation ou de refus de l'action de la part du gestionnaire d'actions préprogrammées en fonction du résultat de ladite vérification.

Selon un mode de réalisation particulier, l'application cliente sélectionne un gestionnaire d'action préprogrammées situé dans un appareil autre que l'application cliente elle-même.

Selon un mode de réalisation particulier, le procédé comporte l'étape de mémorisation par chaque ressource impliquée de son agenda par rapport à l'action.

Selon un mode de réalisation particulier, l'étape de vérification comprend une requête du gestionnaire d'actions préprogrammées auprès de chaque ressource impliquée visant à connaître la disponibilité des ressources impliquées par l'intermédiaire de leurs agendas respectifs.

Selon un mode de réalisation particulier, à l'heure de début de l'action, le gestionnaire d'actions préprogrammées effectue les tâches suivantes:
- réservation des ressources impliquées;
- établissement des connections requises entre les ressources impliquées;
- lancement des commandes auprès des ressources impliquées.

D'autres caractéristiques et avantages de l'invention apparaîtront à travers la description de deux exemples de réalisation non limitatifs, illustrés par les figures jointes, parmi lesquelles :
- la figure 1 est un schéma d'une partie d'un réseau domestique représentant le fonctionnement selon le premier exemple de réalisation,
- la figure 2 est un schéma d'une partie d'un réseau domestique représentant le fonctionnement selon le second exemple de réalisation,
- la figure 3 est un diagramme représentant des échanges de données selon le premier exemple de réalisation,
- la figure 4 est un diagramme représentant des échanges de données selon le second exemple de réalisation.

La présente description concerne un réseau domestique basé sur un bus série conforme à IEEE 1394-1995, ainsi que sur l'architecture dite architecture 'HAVi', définie dans le document 'The HAVi Architecture - Specification of the Home AudioNideo interoperability Architecture' en date du 11 mai 1998, version 0.8, publiée le 15 mai 1998 sur les sites Internet des entreprises Sony, Hitachi, Toshiba, Philips et Sharp. Une nouvelle version du document HAVi (version 1.0beta+) a été publiée entre la date de priorité et la date de dépôt de la présente demande.

Deux demandes de brevet déposées au même nom que la présente demande traitent plus en détail de certains aspects de l'architecture du réseau. Il s'agit de la demande de brevet français numéro 9805110 du 23 avril 1998 ayant pour titre 'Procédé de gestion d'objets dans un réseau de communication et dispositif de mise en oeuvre', ainsi que d'une demande de brevet français déposée le même jour que la demande de priorité de la présente demande et intitulée 'Procédé de gestion de priorités d'accès à des ressources dans un réseau domestique et appareil de mise en oeuvre'. Cette dernière demande porte le numéro FR 9807186. La première demande de brevet concerne la mise en oeuvre de registres d'objets ou de ressources dans les appareils connectés au réseau, ce registre maintenant à jour la liste des ressources ou modules logiciels disponibles au niveau local dans un appareil, tandis que la seconde demande est relative à un gestionnaire des ressources qui gère la réservation des ressources des ressources disponibles localement et participe à la résolution de conflits d'accès à - ou de réservation de - ces ressources.

Pour exécuter une action, telle qu'un enregistrement d'émission, une application peut nécessiter un accès à des ressources publiques. On entend par ressources publiques dans le présent contexte des fonctionnalités d'appareils autres que l'appareil dans lequel s'exécute l'application, mais qui sont potentiellement accessibles par cette application. Font également partie des ressources publiques les ressources accessibles localement par l'application, ainsi que la bande passante. Une application peut elle-même être une ressource. Les registres mentionnés plus haut maintiennent à jour une liste des ressources publiques disponibles, et une application peut déterminer quelles sont ces ressources en lançant une requête au niveau de son registre local, qui peut propager cette requête aux autres registres.

L'appellation 'module logiciel' ('software module' selon la terminologie du document HAVi) désigne aussi bien des applications, des ressources que des services d'un appareil.

Deux exemples de réalisation seront donnés. Selon le premier exemple de réalisation, certaines fonctions relatives à la mise en oeuvre d'actions préprogrammées sont effectuées par ce qui sera appelé une 'ressource principale' dans ce qui suit, tandis que selon le second exemple de réalisation, ces fonctions sont assurées par un objet indépendant des ressources impliquées dans une action préprogrammée, à savoir le gestionnaire d'actions préprogrammées ('GAP').

### EXEMPLE 1

La mise en oeuvre d'une action préprogrammée selon le premier exemple de réalisation implique :
- une application cliente,
- une ressource principale appelée 'ressource cible' ou simplement 'cible',
- le cas échéant, une ou plusieurs autres ressources publiques, appelées 'ressources impliquées', également nécessaires pour mettre en oeuvre l'action préprogrammée.

Dans le cadre d'une demande d'enregistrement, la cible est par exemple la fonctionnalité d'enregistrement d'un appareil d'enregistrement digital (magnétoscope digital, DVD, ...), tandis qu'une ressource impliquée est un tuner. D'autres ressources peuvent être nécessaires : par exemple un transcodeur, nécessaire pour traduire le format des données en celui de l'appareil d'enregistrement, un service de contrôle d'accès, pour autoriser l'accès à des programmes sécurisés, ...

On tiendra compte de la nécessité pour le procédé de mise en oeuvre de l'action préprogrammée de fonctionner normalement même si le dispositif d'affichage par l'intermédiaire duquel l'action a été programmée a été rendu inactif (par exemple, l'utilisateur a éteint le téléviseur lui ayant servi pour la programmation d'un magnétoscope). On se place dans l'hypothèse que ce dispositif ne comporte pas de ressources impliquées (la ressource principale faisant partie des ressources impliquées).

La cible accepte ou non l'action demandée par l'application. Au moment de la programmation de cette action, la cible doit identifier les ressources nécessaires pour l'accomplissement de l'action et les réserver pour la période de temps voulue. Au moment même de l'exécution de l'action, la cible et les ressources impliquées doivent se synchroniser. Ceci a pour conséquence que des informations relatives à faction préprogrammée doivent être mémorisées dans le réseau. Selon le premier exemple de réalisation, c'est la cible qui mémorise ces informations et exécute l'action, tandis que selon un second mode de réalisation, c'est un autre module qui sera chargé de ces fonctions. Une action préprogrammée peut être définie par un certain nombre d'informations, collectées dans une structure de données particulière remplie par l'application programmant l'action et mémorisée par la ressource cible.
- Le type de l'action
- Des paramètres relatifs à l'action (commandes à effectuer pour chaque ressource impliquée, liste des connections à établir avant le lancement de l'action)
- Une date
- Une heure de début
- Une heure de fin
- La périodicité de l'action
- Un identificateur de la ressource cible
- Les identificateurs des ressources impliquées
- Des données utilisateur

Le type de l'action dépend de la nature de la cible. A titre d'exemple l'action peut être 'ENREGISTRER' ou 'LECTURE' pour une ressource ayant une fonctionnalité de mémoire de masse, ou 'SELECTIONNER_SERVICE' pour un démultiplexeur de télévision numérique.

Les paramètres, qui dépendent de l'action à effectuer, servent à définir l'action de manière plus spécifique au niveau de chaque ressource. Un paramètre peut être un événement ou un service au sens de la norme de diffusion de vidéo numérique DVB (pour 'Digital Video Broadcast'). Dans ce cas, les paramètres comporteront un identificateur du type de paramètre, suivi de la valeur du paramètre.

Certains appareils du réseau peuvent ne pas comporter des moyens de traitement pour fournir un service de ce niveau. Par exemple, un appareil d'enregistrement peut ne pas accepter de paramètres après une commande 'ENREGISTRER', car ne pouvant lui-même contrôler un tuner, tandis qu'un appareil plus complexe, ayant cette possibilité, pourra accepter une commande de type 'ENREGISTRER service X'.

La date, les heures de début et de fin et la périodicité de l'action sont des informations classiques.

L'identificateur de la ressource cible est nécessaire pour qu'une application puisse modifier une action déjà programmée. Ce champ n'est pas nécessaire si la cible mémorise directement l'action préprogrammée (i.e. si cette ressource est elle-même la ressource principale d'une action programmée).

Si par exemple une application veut connaître quelle action programmée est associée à une ressource donnée, elle va demander à cette ressource les identifiants de chacune des actions programmées dans lesquelles cette ressource est impliquée. L'application va alors pouvoir consulter la structure de données de l'action programmée qu'elle a choisie, puis va pouvoir la modifier (cette application peut être par exemple celle d'une interface utilisateur, éventuellement commandée par un utilisateur autre que celui qui a programmé l'action qui va être modifiée).

Les identificateurs des ressources impliquées sont utilisés, selon le premier exemple de réalisation, par la cible. La liste permet à la cible de demander des informations relatives aux ressources impliquées, par exemple par l'intermédiaire des registres, ou en leur transmettant directement des messages.

Les données utilisateur comportent par exemple en texte clair la raison d'être de l'action, ce qui peut être important en cas de conflit avec une action programmée antérieurement. Dans ce cas, lorsque le conflit doit être résolu par un utilisateur, typiquement celui programmant l'action plus récente, ces données peuvent lui donner des indications sur l'importance de l'action.

Les ressources impliquées contactées par la ressource cible devront elles aussi mémoriser une partie du contenu de la structure de données ci-dessus : les informations relatives à l'heure et, éventuellement, le type d'action, les paramètres, et les données utilisateur.

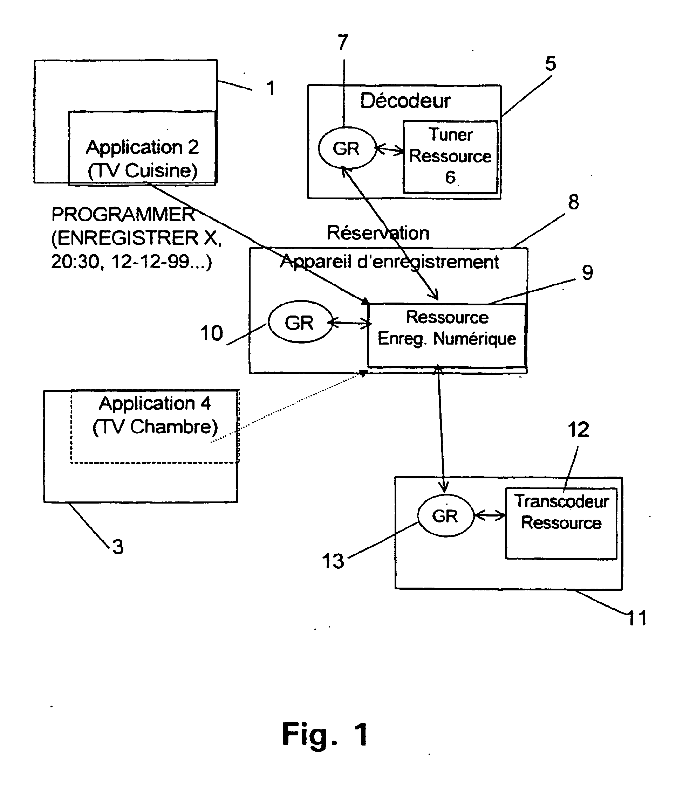

Le premier exemple de réalisation est illustré par la figure 1. La partie du réseau représentée par cette figure comporte cinq appareils. L'appareil 1 est un téléviseur, localisé dans une cuisine et comportant une application 2 (par exemple une interface utilisateur permettant la programmation de l'ensemble des appareils du réseau). L'appareil 3 est également un téléviseur, situé cette fois dans la chambre à coucher et muni d'une application 4, similaire à l'application 2. L'appareil 5 est un décodeur de télévision satellite numérique comportant une ressource tuner 6 et un gestionnaire de ressources 7, tandis que l'appareil 8 est un dispositif d'enregistrement numérique de type DVD, comportant à ce titre la ressource d'enregistrement 9 et un gestionnaire de ressources 10. En dernier lieu, l'appareil 11 est par exemple un autre décodeur, qui possède une fonctionnalité de transcodage des données audio/vidéo codées selon un premier format (celui du décodeur 5) en un second format (celui de l'appareil d'enregistrement 8). L'appareil 11 possède par conséquent une ressource transcodage 12 et un gestionnaire de ressources 13. Les divers appareils, qui peuvent comporter d'autres modules logiciels que ceux illustrés, sont reliés par un bus série, par exemple un bus IEEE 1394-1995.

Selon le premier exemple de réalisation, la ressource cible, dans le présent cas la fonction enregistrement de l'appareil 8, intègre elle-même une application capable de gérer l'action d'enregistrement.

On suppose qu'un utilisateur souhaite enregistrer une émission sur un service X, à 20h30, le 12 décembre 1999, pour une durée de deux heures. Bien que dans l'exemple de la figure 1, une, seule ressource de type tuner et une seule ressource de type transcodage existent dans le réseau, l'utilisateur pourrait, dans un réseau où plusieurs ressources de même type coexisteraient, choisir entre plusieurs ressources de même type du réseau celle qu'il préférerait pour participer à l'exécution de l'action.

Quand la ressource cible 9 reçoit l'action programmée de la part de l'application 2, elle effectue une auto-réservation auprès du gestionnaire de ressources local 10, en procédant de la manière décrite dans la seconde demande de brevet mentionnée au début de cette description. Elle effectue d'autre part la réservation des ressources impliquées (tuner 6, transcodeur 12) auprès des gestionnaires des ressources distants (gestionnaires 7, respectivement 13). Chaque gestionnaire des ressources mémorise les données relatives à la réservation des ressources qui lui sont associées (c'est à dire des ressources ayant la même plate-forme d'exécution que ce gestionnaire des ressources).

Une fois les réservations effectuées, la cible transmet un message de confirmation à l'application 2 à l'origine de l'action.

En cas de conflit de réservation, par exemple en cas de préemption ou négociation d'une ressource déjà réservée pour une action donnée par une application programmant une autre action, le gestionnaire des ressources avertit la cible ayant programmé la première action par un message approprié. Chaque gestionnaire de ressources mémorise en effet dans ce but l'identificateur ou l'adresse du module logiciel qui a effectué une réservation.

A ce stade, en cas de débranchement de l'appareil 1, l'action préprogrammée s'exécutera néanmoins, car toutes les informations relatives à l'action sont stockées au niveau de la cible.

Un utilisateur peut modifier ou supprimer l'action préprogrammée à partir d'une autre application, telle que l'application 4. Si l'application 4 veut accéder à toutes les actions programmées concernant une ressource donnée (trouvée par l'intermédiaire du registre local de l'application), la ressource contactée par l'application peut donner les identifiants des ressources principales de chacune des actions programmées dans lesquelles elle est impliquée. La totalité de la structure de données décrivant l'action programmée peut être ensuite retrouvée en contactant directement chaque ressource principale.

Au moment du début de l'action, la cible relie les différentes ressources grâce au module logiciel local appelé gestionnaire de connexions ('SM' ou 'Stream Manager' selon la terminologie du document HAVi).

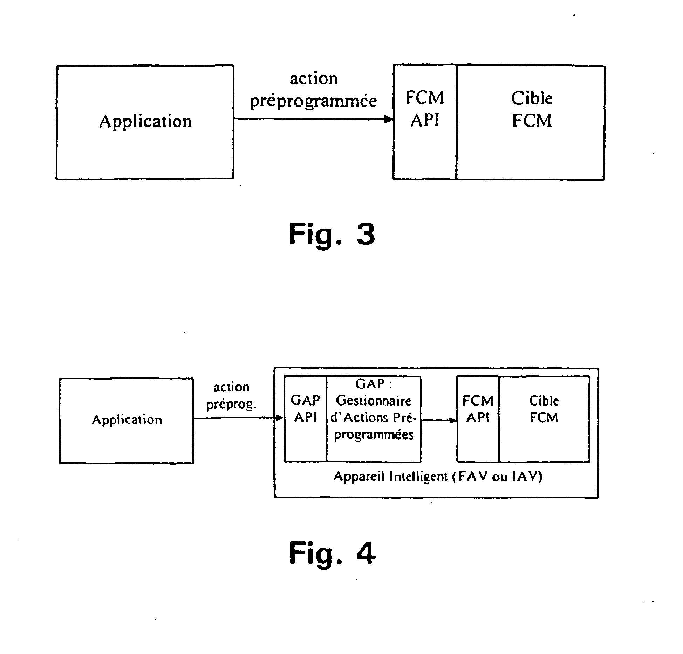

Une ressource peut être désignée sous les termes de gestionnaire de composante fonctionnelle ('FCM' ou 'Function Component Manager' selon la terminologie HAVi). L'architecture peut alors être représentée par le schéma de la figure 3, où une application transmet une programmation d'action à l'interface de programmation d'application faisant partie de la cible.

Plus généralement, il existe d'autres ressources que des FCM dans le cadre de HAVi. Il existe par exemple un autre type de ressource, appelé 'DCM' pour 'Device Control Manager' ou encore gestionnaire de contrôle d'appareil. Tandis qu'un FCM est la représentation logicielle d'une fonction d'un appareil, un DCM est la représentation logicielle d'un appareil et peut intégrer à ce titre plusieurs FCM. Un DCM est alors un intermédiaire entre une application principale effectuant une réservation et un ou plusieurs FCM contenus dans le DCM.

### EXEMPLE 2

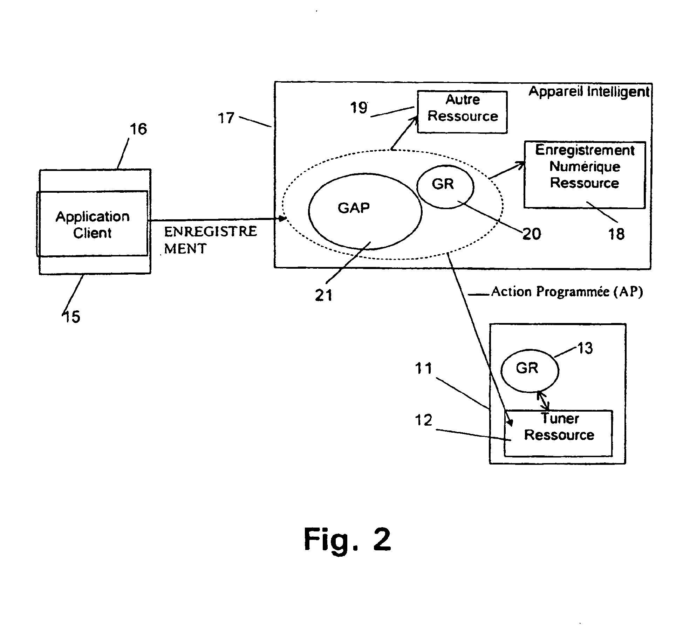

Le second exemple de réalisation est illustré par la figure 2. On suppose ici que des ressources n'intègrent pas d'applications capables de gérer les actions préprogrammées comme dans le premier exemple de réalisation. On parlera dans ce cas de 'ressources passives'. Ces dernières peuvent cependant mémoriser une partie de ces données (par exemple les horaires des actions qu'elles doivent effectuer et éventuellement paramètres et données utilisateur), comme indiqué dans le premier exemple de réalisation.

L'application cliente initiatrice 15 de la programmation de l'action est comme dans le premier exemple une interface localisée dans un téléviseur 16. L'appareil d'enregistrement 17 comporte la ressource d'enregistrement numérique 18, une autre ressource 19, ainsi qu'un gestionnaire des ressources 20.

Selon le présent exemple de réalisation, l'appareil 17 comporte également un gestionnaire d'actions préprogrammées 21 ('GAP'). Ce gestionnaire d'actions 21 est un service au sens du document HAVi et effectue toutes les réservations nécessaires à l'accomplissement de l'action. Il n'y a qu'une différence fonctionnelle entre le gestionnaire d'actions préprogrammées et le gestionnaire de ressources. Tandis que le gestionnaire d'actions préprogrammées gère les actions préprogrammées, le gestionnaire de ressources gère les réservations correspondant aux actions et les éventuels conflits qui s'en suivent. Ces deux fonctions peuvent être intégrées dans un même objet logiciel, comme indiqué à la figure 2. La représentation distincte du GAP et du GR est utilisée simplement pour des questions de cohérence avec le premier exemple de réalisation, ou ces fonctions étaient mises en oeuvre par des objets séparés.

Le gestionnaire d'actions 21 gère les ressources passives de l'appareil 17, mais aussi de l'appareil 5.

La mise en oeuvre d'une action préprogrammée selon le second exemple de réalisation implique :
- une application cliente;
- un gestionnaire d'actions préprogrammées ('GAP');
- une ou plusieurs ressources publiques, appelées 'ressources impliquées', nécessaires pour mettre en oeuvre l'action préprogrammée.

Dans le cadre d'une demande d'enregistrement, les ressources impliquées sont par exemple:
- la fonctionnalité d'enregistrement d'un appareil d'enregistrement digital (magnétoscope digital, DVD....),
- un tuner.

D'autres ressources peuvent être nécessaires : par exemple un transcodeur, nécessaire pour traduire le format des données en celui de l'appareil d'enregistrement, un service de contrôle d'accès, pour autoriser l'accès à des programmes sécurisés, ...

On tiendra compte de la nécessité pour le procédé de mise en oeuvre de l'action préprogrammée de fonctionner normalement même si le dispositif d'affichage par l'intermédiaire duquel l'action a été programmée a été rendu inactif (par exemple, l'utilisateur a éteint le téléviseur lui ayant servi pour la programmation d'un magnétoscope). Par conséquent, ce dispositif ne comporte de préférence pas les ressources impliquées.

Le gestionnaire d'actions préprogrammées accepte ou non l'action demandée par l'application cliente. Cette dernière a au préalable identifié les ressources nécessaires à l'accomplissement de l'action, les commandes à effectuer à l'heure du début de l'action et les connections nécessaires entre les diverses ressources qui doivent être établies avant l'heure de début de l'action.

Le GAP mémorise toutes ces données de l'action, et renvoie un identifiant de l'action à l'application cliente. Par ailleurs, chaque ressource impliquée mémorise son propre agenda quant aux actions à effectuer. Cet agenda comporte en particulier les horaires des réservations, mais non pas les commandes et connections liées à aux actions. Ceci demanderait trop de place en mémoire. Grâce à cet agenda, chaque ressource peut informer d'autres GAP lançant des actions de sa disponibilité ou indisponibilité pour ces actions.

Avant d'accepter ou de rejeter une demande d'action, le GAP interroge chaque ressource pour savoir si elle est disponible entre les heures de début et de fin de l'action. A l'heure de début de l'action, si toutes les ressources sont présentes, le GAP réserve les ressources (il s'agit ici de la réservation proprement dite, par rapport aux simples indications d'agenda précédemment programmées), établit les connections requises et lance les commandes. L'établissement des connections est demandé au module logiciel local appelé gestionnaire connexions ('SM' ou 'Stream Manager' selon la terminologie du document HAVi).

Si l'une des ressources impliquées dans une action préprogrammée disparaît avant l'heure de début de l'action, cette dernière est suspendue jusqu'à ce que la ressource soit de nouveau disponible sur le réseau. Si la ressource manquante réapparaît, même après l'heure du début de l'action préprogrammée, l'action est quand même exécutée, bien que décalée dans le temps.

Une action préprogrammée peut être définie par un certain nombre d'informations, collectées dans une structure de données particulière remplie par l'application programmant l'action et mémorisée selon le second exemple de réalisation par le gestionnaire des actions préprogrammées.
- Le type de l'action
- Des paramètres relatifs à l'action (commandes à effectuer pour chaque ressource impliquée, liste des connections à établir avant le lancement de l'action)
- Une date
- Une heure de début
- Une heure de fin
- La périodicité de l'action
- Les identificateurs des ressources impliquées
- Des données utilisateur

Les différentes éléments ont une signification similaire à ce qui a été décrit en liaison avec le premier exemple de réalisation.

Si une application veut connaître quelle action préprogrammée est associée à une ressource donnée, elle peut consulter toutes les actions programmées qui sont enregistrées dans un GAP. Elle peut aussi demander à la ressource les identifiants de chacune des actions préprogrammées dans lesquelles cette ressource est impliquée. Elle peut donc retrouver l'identifiant du GAP qui maintient les données d'une action préprogrammée donnée.

Une application a aussi la possibilité d'annuler une action préprogrammée, ou de modifier une telle action, auprès du GAP en charge de cette action.

Les identificateurs des ressources impliquées sont utilisés selon le second exemple de réalisation par le GAP. La liste permet au GAP de demander des informations relatives aux ressources impliquées, par exemple par l'intermédiaire des registres, ou en leur transmettant directement des messages.

Le GAP distribue l'action préprogrammée aux gestionnaires de contrôle d'appareils (DCM - voir ci-dessous) des ressources impliquées, avec tous les paramètres nécessaires à chaque ressource. Chaque ressource (ou leur DCM) doit déterminer si les connections demandées et les commandes prévues pourront être effectuées à l'heure prévue.

Si les ressources sont capables d'honorer la demande, elles en avertissent le GAP, qui renvoie un identificateur de l'action à l'application cliente pour lui signaler la prise en charge de l'action.

Si les ressources ne sont pas capables d'honorer la demande, ou si l'une des ressources requises n'est pas présente sur le réseau, ou encore si la préemption d'une ressource impliquée et déjà réservée dans le cadre d'une autre action n'a pas été possible, le GAP refuse l'action préprogrammée en transmettant un message approprié à l'application cliente.

En cas de conflit de réservation, par exemple en cas de préemption ou négociation d'une ressource indisponible, le GAP avertit l'application cliente ayant programmé l'action par un message approprié. Chaque GAP mémorise en effet dans ce but l'identificateur ou l'adresse de l'application qui a effectué une réservation.

Une ressource peut être désignée sous les termes de gestionnaire de composante fonctionnelle ('FCM' ou 'Function Component Manager' selon la terminologie HAVi). L'architecture peut alors être représentée par le schéma de la figure 3, où une application transmet une programmation d'action à l'interface de programmation d'application faisant partie de la cible.

Plus généralement, il existe d'autres ressources que des FCM dans le cadre de HAVi. Il existe également un autre type de ressource, appelée 'DCM' pour 'Device Control Manager' ou encore gestionnaire de contrôle d'appareil. Tandis qu'un FCM est la représentation logicielle d'une fonction d'un appareil, un DCM est la représentation logicielle d'un appareil et peut intégrer à ce titre plusieurs FCM. Un DCM est alors un intermédiaire entre une application principale effectuant une réservation et un ou plusieurs FCM contenus dans le DCM.

La figure 4 est un schéma simplifié du principe du second exemple de réalisation. En résumé, pour programmer une action, une application s'adresse au gestionnaire d'actions préprogrammées, qui est obligatoirement présent dans l'appareil comportant la ressource cible. L'application agit à travers l'interface de programmation du gestionnaire d'actions, qui à son tour agit à travers l'interface de programmation de la cible. L'appareil comportant le gestionnaire et la cible est soit un appareil à fonctionnalités complètes ('FAV'), soit un appareil à fonctionnalités intermédiaires ('IAV').

## Revendications

1. Procédé de programmation d'actions de ressources dans un réseau d'appareils domestiques **caractérisé en ce qu'**il comporte les étapes de:
- émission d'une demande de programmation d'une action par une application cliente (15) vers un gestionnaire d'actions préprogrammées (21) d'un appareil du réseau (17), ladite demande de programmation comportant un ensemble de paramètres de définition de l'action et une liste de ressources impliquées dans l'accomplissement de l'action,
- vérification par ledit gestionnaire d'actions (21) de la disponibilité des ressources impliquées dans l'accomplissement de l'action,
- transmission à l'application cliente (15) d'un message d'acceptation ou de refus de l'action de la part du gestionnaire d'actions préprogrammées en fonction du résultat de ladite vérification.

2. Procédé selon la revendication 1, **caractérisé en ce que** l'application cliente sélectionne un gestionnaire d'actions préprogrammées situé dans un appareil autre que l'application cliente elle-même.

3. Procédé selon l'une des revendications 1 ou 2, **caractérisé en ce qu'**il comporte l'étape de mémorisation par chaque ressource impliquée de son agenda par rapport à l'action.

4. Procédé selon l'une des revendications 1 à 3, **caractérisé en ce que** l'étape de vérification comprend une requête du gestionnaire d'actions préprogrammées auprès de chaque ressource impliquée visant à connaître la disponibilité des ressources impliquées par l'intermédiaire de leurs agendas respectifs.

5. Procédé selon l'une des revendications 1 à 4, **caractérisé en ce qu'**à l'heure de début de l'action, le gestionnaire d'actions préprogrammées effectue les tâches suivantes:
- réservation des ressources impliquées;
- établissement des connections requises entre les ressources impliquées;
- lancement des commandes auprès des ressources impliquées.

6. Procédé selon l'une des revendications 1 à 5, **caractérisé en ce que** les paramètres de définition de l'action comportent une heure de début de l'action.

7. Procédé selon l'une des revendications 1 à 6, **caractérisé en ce que** les paramètres de définition de l'action comportent une heure de fin de l'action.

8. Procédé selon l'une des revendications 1 à 7, **caractérisé en ce que** les paramètres de définition de l'action comportent un paramètre de périodicité de l'action.

9. Procédé selon l'une des revendications 1 à 8, **caractérisé en ce que** les paramètres de définition de l'action comportent une liste des connections à établir avant le lancement de l'action.

10. Procédé selon la revendication 1, **caractérisé en ce que** l'étape de vérification de disponibilité comprend l'étape d'interrogation des ressources impliquées pour connaître leur disponibilité entre une heure de début et une heure de fin de l'action.

11. Procédé selon l'une des revendications précédentes, **caractérisé en ce que** l'étape d'envoi d'un message d'acceptation est précédée par une étape de réservation des ressources impliquées.

12. Appareil (17) dans un réseau domestique **caractérisé en ce qu'**il comporte un gestionnaire d'actions préprogrammées (21) pour recevoir une demande de programmation d'une action transmise par une application cliente (15), ladite demande de programmation comportant un ensemble de paramètres de définition de l'action et une liste des ressources impliquées dans l'accomplissement de l'action, ledit gestionnaire d'actions préprogrammées étant prévu pour vérifier la disponibilité des ressources impliquées dans l'accomplissement de l'action et pour transmettre à l'application cliente (15) un message d'acceptation ou de refus de l'action.

13. Appareil selon la revendication 12, **caractérisé en ce que** les paramètres comportent l'heure de début et de fin de l'action et **en ce que** la vérification de la disponibilité comporte vérification de la disponibilité des ressources impliquées entre ces heures.

## Patentansprüche

1. Programmierverfahren von Ressourcenabläufen in einem Netzwerk für Haushaltsgeräte
**dadurch gekennzeichnet, dass**
- eine Anfrage zur Programmierung eines Vorganges durch eine Klientenanwendung (15) an ein Verwaltungsprogramm mit vorprogrammierten Aktionen (21) eines Gerätes (17) im Netzwerk gesendet wird, wobei die Programmieranfrage eine Reihe von Parametern beinhaltet, welche die Aktion bestimmen und eine Liste mit den für die Durchführung des Vorgang beteiligten Ressourcen,
- Überprüfung der Verfügbarkeit der für den Vorgang beteiligten Ressourcen durch das Vorgangsverwaltungsprogramm (21),
- Übertragung der Meldung zur Annahme oder zur Ablehnung der Aktion an die Klientenanwendung (15) seitens des vorprogrammierten Vorgangsverwaltungsprogramms in Abhängigkeit vom Ergebnis der Überprüfung.

2. Vorgang nach Anspruch 1
**dadurch gekennzeichnet**, **das**
die Klientenanwendung ein vorprogrammiertes Aktionsverwaltungsprogramm wählt, das in einem anderen Gerät als dem der Klientenanwendung selbst, untergebracht ist.

3. Vorgang nach Anspruch 1
**dadurch gekennzeichnet, dass**
er den Schritt der Speicherung durch jede in seinem Programm beteiligte Ressource in Bezug auf die Aktion enthält.

4. Vorgang nach Anspruch 1
**dadurch gekennzeichnet, dass**
der Schritt zur Überprüfung eine Anfrage des vorprogrammierten Aktionsverwaltungsprogramms jeder beteiligten Ressource beinhaltet, mit dem Ziel, die Verfügbarkeit der beteiligten Ressourcen durch ihre jeweiligen Programme zu ermitteln.

5. Vorgang nach Anspruch 1
**dadurch gekennzeichnet, dass**
zum Beginn der Aktion das vorprogrammierte Aktionsverwaltungsprogramm die folgenden Prozesse ausführt:
- Reservierung der beteiligten Ressourcen;
- Erstellung der erforderlichen Verbindungen zwischen den beteiligten Ressourcen;
- Veranlassen der Befehle bei den beteiligten Ressourcen.

6. Vorgang nach den Ansprüchen 1 bis 5
**dadurch gekennzeichnet, dass**
die Parameter, die die Aktion bestimmen, eine Startzeit der Aktion beinhalten.

7. Vorgang nach den Ansprüchen 1 bis 6
**dadurch gekennzeichnet, dass**
die Parameter, welche die Aktion bestimmen, eine Endzeit der Aktion beinhalten.

8. Vorgang nach den Ansprüchen 1 bis 7
**dadurch gekennzeichnet, dass**
die Parameter, welche die Aktion bestimmen, eine Periodizität der Aktion beinhalten.

9. Vorgang nach den Ansprüchen 1 bis 8
**dadurch gekennzeichnet, dass**
die Parameter, welche die Aktion bestimmen, eine vor dem Start der Aktion zu erstellende Liste der Verbindungen beinhalten.

10. Vorgang nach Anspruch 1
**dadurch gekennzeichnet, dass**
der Schritt zu Überprüfung der Verfügbarkeit den Schritt zur Abfrage der beteiligten Ressourcen nach ihrer Verfügbarkeit zwischen Startzeit und Endzeit der Aktion beinhaltet.

11. Vorgang nach allen vorhergehenden Ansprüchen
**dadurch gekennzeichnet, dass**
dem Schritt zur Übertragung der Nachricht zur Annahme ein Schritt zur Reservierung der beteiligten Ressourcen vorausgeht.

12. Gerät (17) in einem Heimnetzwerk
**dadurch gekennzeichnet, dass**
es ein Verwaltungsprogramm für vorprogrammierte Aktionen (21) zum Empfang einer Anfrage zur Programmierung einer Aktion beinhaltet, die durch eine Klientenanwendung (15) übertragen wird, wobei die Anfrage zur Programmierung eine Reihe von Parametern, welche die Aktion bestimmen und eine Liste der zur Erfüllung der Aktion beteiligten Ressourcen beinhaltet und wobei das vorprogrammierte Aktionsverwaltungsprogramm geeignet ist, die Verfügbarkeit der beteiligten Ressourcen bei der Erfüllung der Aktion zu überprüfen und die Nachricht zur Annahme oder Ablehnung der Aktion an die Klientenanwendung (15) übermittelt.

13. Gerät nach Anspruch 12
**dadurch gekennzeichnet, dass**
die Parameter die Anfangs- und Endzeit der Aktion beinhalten und dass die Überprüfung der Verfügbarkeit die Prüfung der Verfügbarkeit der beteiligten Ressourcen während dieser Zeiten beinhaltet.

## Claims

1. Process for programming actions of resources in a network of domestic devices, **characterized by** the steps of:
- sending a request for programming an action by a client application (15) to a manager of preprogrammed actions (21) of a device (17) of the network, the programming request including a set of parameters defining the action and a list of resources involved in accomplishing the action,
- verification by the actions manager (21) of the availability of the resources involved in accomplishing the action,
- transmission to the client application (15) of a message of acceptance or of refusal of the action on the part of the preprogrammed actions manager depending on the result of the verification.

2. Process according to Claim 1, **characterized in that** the client application selects a preprogrammed action manager situated in a device other than the client application itself.

3. Process according to Claim 1, **characterized in that** it includes the step of storage by each resource involved of its agenda with respect to the action.

4. Process according to Claim 1, **characterized in that** the verification step comprises a request of the preprogrammed actions manager from each resource involved aimed at ascertaining the availability of the resources involved by way of their respective agendas.

5. Process according to Claim 1, **characterized in that**, at the start time of the action, the preprogrammed actions manager performs the following tasks:
- reservation of the resources involved;
- establishment of the requested connections between the resources involved;
- instigating of the commands with the resources involved.

6. Process according to one of the claims 1 to 5, **characterized in that** the parameters defining the action comprise an action start time.

7. Process according to one of the claims 1 to 6, **characterized in that** the parameters defining the action comprise an action end time.

8. Process according to one of the claims 1 to 7, **characterized in that** the parameters defining the action comprise a parameter of periodicity of the action.

9. Process according to one of the claims 1 to 8, **characterized in that** the parameters defining the action comprise a list if connections to be established prior to launching the action.

10. Process according to claim 1, **characterized in that** the step of verification of availability comprises the step of asking the involved resources for their availability between a start time and an end time of the action.

11. Process according to one of the preceding claims, **characterized in that** the step of sending the message of acceptance is preceeded by a steo of reservation of the involved resources.

12. Device (17) in a home network **characterized in that** it comprises a manager of preprogrammed actions (21) for receiving a request for programming an action transmitted by a client application (15), said programming request comprising a set of parameters defining the action and a list of resources involved in accomplishing the action, said preprogrammed actions manager being adapted to check the availability of resources involved in the accomplishment of the action and to transmit a message of acceptance or refusal of the action to the client application (15).

13. Device according to claim 12, **characterized in that** the parameters comprise the start and end time of the action and **in that** the ckecking of the availability comprises checking of the availability of the involved resources during between these times.
